# EUROPEAN PATENT APPLICATION

(11) **EP 4 610 964 A1**
(43) Date of publication of application: **03.09.2025**
(21) Application number: 23806026.3
(22) Date of filing: 23.10.2023
(51) Int. Cl.: G09B 23/28, G09B 23/34

(54) **DEVICE FOR SIMULATING SURGICAL OPERATIONS**

(30) Priority: 24.10.2022 ES 202230912
(71) Applicant: Hospital Sant Joan de Deu, 08950 Esplugues de Llobregat Barcelona (ES)
(72) Inventor: LANGDON MONTERO, Cristobal, 08950 Esplugues de Llobregat (Barcelona) (ES); ROJAS LECHUGA, Maria Jesús, 08950 Esplugues de Llobregat (Barcelona) (ES); CARO PINTO, Iván Alberto, 08950 Esplugues de Llobregat (Barcelona) (ES); ADELL GOMEZ, Nuria Esperanza, 08950 Esplugues de Llobregat (Barcelona) (ES); VALLS ESTEVE, Arnau, 08950 Esplugues de Llobregat (Barcelona) (ES)
(74) Representative: Herrero & Asociados, S.L.
(86) International application number: PCT/ES2023/070620
(87) International publication number: WO 2024/089309

(57) **Abstract**

The device for simulating surgical operations comprises a central piece (1) comprising a housing (11); and a removable partition (2) which is removably positioned in the housing (11). The removable partition (2) preferably comprises a central wall (21) and two elastic layers (22), one on each side of the central wall (21).

It provides a device for simulating operations and surgical skills that is as simple as possible, both in its number of parts and in the way it is manufactured.

## Description

### Field of the invention

The present invention relates to a device for simulating surgical operations, in particular to a device for simulating endoscopic endonasal, nasopharyngeal, nasal septum, nasal pyramid and skull base surgery of persons.

### Background of the invention

Trainee surgeons require surgical skills training to master surgical techniques.

This requires simulations, which allow training in a safe, controlled, and standardized environment, without compromising patient safety.

The aim of the simulation is that the skills acquired are transferred to the operating room without risk to the patients.

One problem with simulations of surgical operations is that they have to be performed on cadavers, animal models or on devices that have to reproduce human anatomy as reliably as possible.

These currently known devices for simulating surgical operations have the disadvantage that they are complex and expensive to manufacture.

### Description of the invention

Therefore, an objective of the present invention is to provide a device for simulating operations and surgical skills that is as simple as possible, both in its number of parts and in the way it is manufactured.

With the simulation device of the invention, the aforementioned disadvantages are solved, presenting other advantages that will be described below.

The device for simulating surgical operations according to the present invention comprises:
- a central piece comprising a housing; and
- a removable partition that is removably placed into the housing.

Advantageously, the removable partition comprises a central wall and two elastic layers, one on each side of the central wall.

The device for simulating surgical operations according to the present invention also preferably comprises a removable piece which is removably attachable to the central part and which preferably comprises a central partition arranged in an orifice.

Furthermore, the device for simulating surgical operations according to the present invention may also comprise an outer piece removably attachable to the removable piece, for example in the form of a nose.

The device for simulating surgical operations according to the present invention also preferably comprises a support base for supporting the central piece, which support base preferably comprises a support arm with an option to adjust different inclinations of the model.

Advantageously, all parts of the device are made of plastic material, which can be printed on a 3D printer.

With the device for simulating surgical operations according to the present invention, a simple simulator is achieved which adequately reproduces the human anatomy, in particular the face of a person and the nose.

In particular, in the removable partition, the central wall simulates a nasal septum, and the elastic layers simulate, respectively, the cartilaginous wall and the skin and mucosa of the nasal septum, which is replaced after each use.

### Brief description of the drawings

For a better understanding of what has been explained above, some drawings are included in which, schematically and only by way of a non-limiting example, a practical case of embodiment is shown.

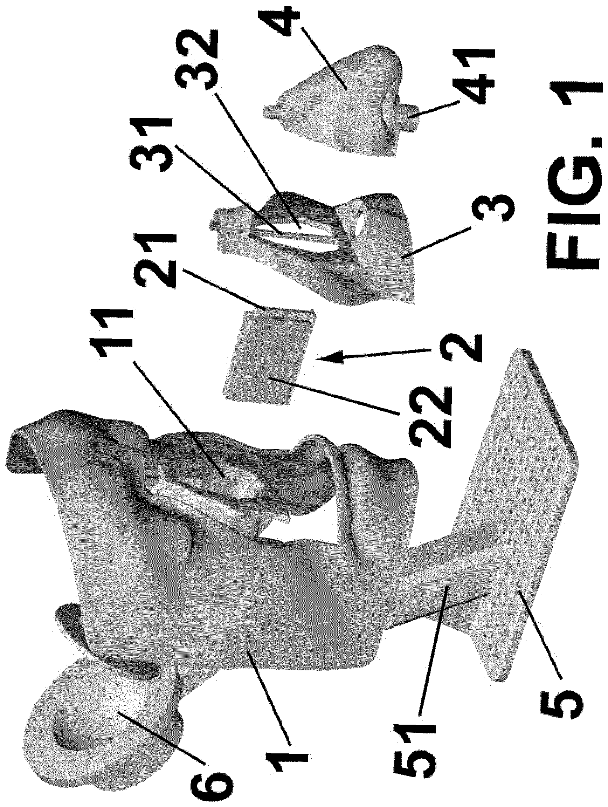

Figure 1 is an exploded perspective view of the device for simulating surgical operations according to the present invention.

### Description of a preferred embodiment

Figure 1 shows the device for simulating surgical operations according to the present invention in an exploded view showing its components.

In particular, according to the embodiment depicted, a device for endoscopic endonasal, nasopharyngeal, nasal septum and pyramid and skull base surgery simulation of humans is shown.

This simulation device has been developed by CAD design and 3D printing, allowing a reduced manufacturing cost, which can be printed both with FDM technologies ("Fused Deposition Modeling") with thermoplastic materials of different colors, and with a combination of light-curing resins, to give more realism to the soft parts and to combine hard and soft materials.

The simulation device according to the present invention comprises a central piece (1) of various materials and colors according to exercises and areas. This central piece (11) simulates a person's face and may include cavities simulating frontal and maxillary sinuses (not shown in the figure) and comprises a housing (11), inside which a removable partition (2) is removably housed.

As can be seen in the figure, the housing (11) is located in a substantially centered frontal position of the central piece (1).

The removable partition (2) comprises a central wall (21), simulating a nasal septum, made of a hard plastic material, and two elastic layers (22), one on each side of the central wall (21). These elastic layers (22) simulate the cartilage wall and skin of the nasal septum. This removable partition (2) is replaced after each simulation.

The simulation device according to the present invention also comprises a removable piece (3) which is removably coupled to the central piece (1). This removable piece (3) comprises a central partition (31) located in an orifice (32), which is located in the frontal and centered part of the removable piece (3), in correspondence with the housing (1) of the central piece (1).

Furthermore, the simulation device according to the present invention also comprises an outer piece (4), for example in the form of a nose, which is elastic. For attachment to the removable piece (3), the outer piece (4) comprises, according to the embodiment shown, cylinders (41).

The simulation device according to the present invention also comprises a support base (5) provided with a support arm (51) for supporting the central piece (1) and may comprise an additional support (6) on which different objects can be placed to practice the skills.

To use the simulation device according to the present invention it is only necessary to place a removable partition (2) in its position in the housing (11), and replace it with a new one once the simulation is finished.

By way of example only and for completeness of description, the materials that can be used in the simulation device according to the present invention, according to two examples, are indicated below:
- Example 1:
   It is a combination of polylactic acid (PLA) and acrylonitrile butadiene styrene (ABS) in different colors to be printed with FDM 3D technology.
- Example 2:
   All materials used are light-curing resins from Stratasys.

The central piece (1) is made of various materials and colors according to exercises and areas:
a. white zone: Draftwhite^{®} rigid material,
b. pink zone: Draftwhite^{®} and VeroMagenta^{®} rigid material, with different color intensities
c. yellow zone: Draftwhite^{®} and VeroYellow^{®}.

In the removable partition (2), the elastic layers (22) consist of two 0.5 mm components (SUP710^{®} and ElasticoClear^{®}) and the central wall (21) is made of hard plastic.

The removable piece (3) is made of Draftwhite^{®}.

The outer piece (4) is made of ElasticoClear^{®} and the cylinders (41) of ElasticoClear^{®} and VeroMagenta^{®}.

The support base (5) is made of Draftwhite^{®} and VeroYellow^{®}.

Although reference has been made to a specific embodiment of the invention, it is obvious to a person skilled in the art that the simulation device described is susceptible to numerous variations and modifications, and that all the details mentioned can be replaced by technically equivalent ones, without departing from the scope of protection defined by the appended claims.

## Claims

1. A device for simulating surgical operations, **characterized in that** it comprises:
- a central piece (1) comprising a housing (11); and
- a removable partition (2) which is removably placed into the housing (11).

2. Device for simulating surgical operations according to claim 1, wherein the removable partition (2) comprises a central wall (21) and two elastic layers (22), one on each side of the central wall (21).

3. Device for simulating surgical operations according to claim 1 or 2, also comprising a removable piece (3) which is removably attachable to the central piece (1).

4. Device for simulating surgical operations according to claim 3, also comprising an outer piece (4) removably attachable to the removable piece (3).

5. Device for simulating surgical operations according to claim 3, wherein the removable piece (3) comprises a central partition (31) arranged in an orifice (32).

6. Device for simulating surgical operations according to any one of the preceding claims, also comprising a support base (5) for supporting the central piece (1).

7. Device for simulating surgical operations according to claim 6, wherein the support base (5) comprises a support arm (51).

8. Device for simulating surgical operations according to any one of the preceding claims, wherein all pieces (1, 2, 3, 4, 5) of the device are made of plastic material.

9. Device for simulating surgical operations according to claim 4, wherein the outer piece (4) is shaped like a nose.
